# EUROPEAN PATENT APPLICATION

(11) **EP 1 598 946 A1**
(43) Date of publication of application: **23.11.2005**
(21) Application number: 05008787.3
(22) Date of filing: 21.04.2005
(51) Int. Cl.: H04B 1/38

(54) **Case for mobile communication terminals**

(30) Priority: 19.05.2004 KR 2004035696
(71) Applicant: Hyunwon Inc., Chung-Gu, Daegu (KR)
(72) Inventor: Lee, Young-Hee, Seoul (KR)
(74) Representative: Scheele, Friedrich

(57) **Abstract**

Disclosed herein is a case for mobile communication terminals that is capable of fixing both sides of the body part of a sliding-type terminal when the terminal is attached to the case such that the front surface of a sliding cover part disposed on the body part of the sliding-type terminal is fully exposed. The case comprises a back plate for allowing a terminal to be attached thereto, and a flip-type cover connected to the lower end of the back plate for covering the front surface of the terminal. The back plate is provided at the front surface thereof with a fixing member for detachably fixing both sides of the body part of the terminal. With the case according to the present invention, the sliding cover part is easily opened and closed when the sliding-type terminal is attached to the case.

## Description

### BACKGROUND OF THE INVENTION

### Field of the Invention

The present invention relates to a portable case used for mobile communication terminals, and, more particularly, to a case used for sliding-type mobile communication terminals.

### Description of the Related Art

Generally, mobile communication terminals (hereinafter, referred to as "terminals") are the newest communication devices that are capable of not only performing wireless communication but also performing various computer work through network connections without regard to location. The mobile communication terminals include personal digital assistants (PDAs), mobile phones, or portable personal computers.

It has recently been necessary that each terminal be provided with a large-sized liquid crystal display (LCD) unit for a user to enjoy various multimedia functions, such as games or moving images, and accordingly, small-sized sliding-type terminals with relatively large-sized LCD units are placed on the market, which are spotlighted.

Such terminals each have various electronic components mounted therein. As a result, the terminals may be broken or malfunction when external forces are directly applied to the terminals. Especially, the LCD units and key buttons of the terminals are exposed, and therefore, they may be contaminated by various foreign matter during carrying the terminals.

For this reason, conventional cases have been used to cover the terminals such that the terminals can be safely carried and used. However, most of the conventional cases have pockets securely surrounding the front and rear parts of the terminals for covering the terminals with the result that the use of the terminals is limited when the sliding-type terminals are covered by the conventional cases.

Specifically, a sliding cover part is disposed on a body part of each sliding-type terminal such that the sliding cover part is slidably opened and closed. Accordingly, the pocket of the conventional case covers the front surface of the sliding cover part of the terminal when the sliding-type terminal is attached to the case. Consequently, the opening and closing operation of the sliding cover part is very inconvenient.

Also, a terminal having a rotary camera mounted at the upper end thereof has a problem in that a visual field of a lens of the camera is obstructed by the case when the camera is rotated to take photographs of the scenery at the rear of the terminal.

### SUMMARY OF THE INVENTION

Therefore, the present invention has been made in view of the above problems, and it is an object of the present invention to provide a case for mobile communication terminals that is capable of fixing both sides of the body part of a sliding-type terminal when the terminal is attached to the case such that the front surface of a sliding cover part disposed on the body part of the sliding-type terminal is fully exposed.

It is another object of the present invention to provide a case for mobile communication terminals that is capable of doubly fixing a terminal.

It is yet another object of the present invention to provide a case for mobile communication terminals that is capable of preventing a visual field of a lens of a rotary camera from being obstructed by the case when the rotary camera is provided at the upper end of the terminal.

In accordance with the present invention, the above and other objects can be accomplished by the provision of a case for mobile communication terminals, the case comprising: a back plate for allowing a terminal to be attached thereto; and a flip-type cover connected to the lower end of the back plate for covering the front surface of the terminal, wherein the back plate is provided at the front surface thereof with a fixing member for detachably fixing both sides of the body part of the terminal.

Preferably, the case further comprises: an auxiliary fixing part for secondarily fixing the body part of the terminal to the back plate such that the body part of the terminal is doubly fixed to the case.

Preferably, the back plate is provided at a predetermined position of one end thereof with a cutout part corresponding to a camera mounted to the terminal for preventing a visual field of a lens of the camera from being obstructed by the case.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a perspective view illustrating a case for mobile communication terminals according to a first preferred embodiment of the present invention;
FIG. 2 is a perspective view illustrating how the case for mobile communication terminals according to the first preferred embodiment of the present invention shown in FIG. 1 is used;
FIG. 3 is a perspective view, partially cutaway, illustrating a case for mobile communication terminals according to a second preferred embodiment of the present invention;
FIG. 4 is a perspective view illustrating a case for mobile communication terminals according to a third preferred embodiment of the present invention; and
FIG. 5 is a perspective view illustrating a case for mobile communication terminals according to a fourth preferred embodiment of the present invention.

### DESCRIPTION OF THE PREFERRED EMBODIMENTS

Now, preferred embodiments of the present invention will be described in detail with reference to the accompanying drawings.

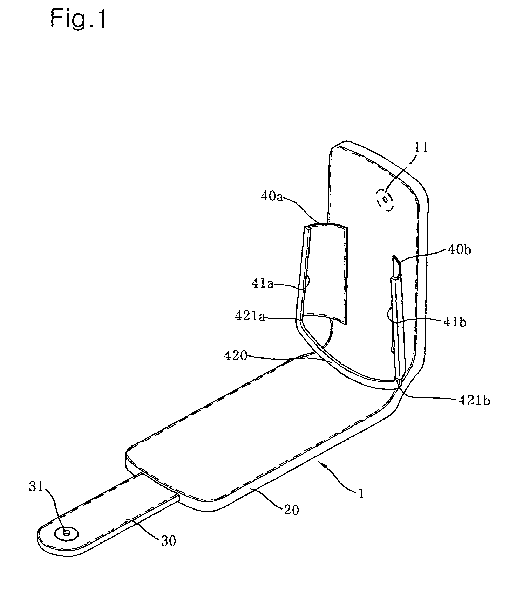

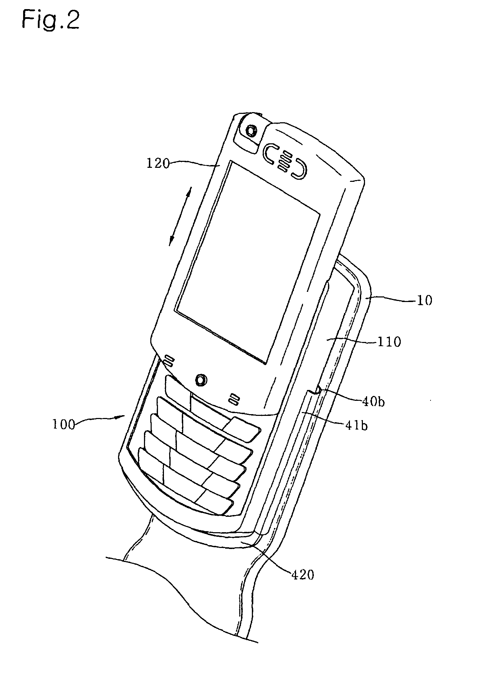

FIG. 1 is a perspective view illustrating a case 1 for mobile communication terminals according to a first preferred embodiment of the present invention, and FIG. 2 is a perspective view illustrating how the case 1 for mobile communication terminals according to the first preferred embodiment of the present invention shown in FIG. 1 is used. As shown in FIGS. 1 and 2, the case 1 comprises: a back plate 10, to which a terminal 100 is attached; and a flip-type cover 20 connected to the lower end of the back plate 10 for covering the front surface of the terminal 100. At the rear surface of the back plate is disposed a magnet 11, and to the end of the cover 20 is connected a strip 30 with a fixing metal piece 31, which corresponds to the magnet 11.

As shown in FIG. 2, the terminal 100 is a sliding-type terminal comprising a body part 110 and a sliding cover part 120 disposed on the body part such that the sliding cover part 120 is slidably opened and closed. At the back plate 10 of the case 1 is disposed a fixing member for detachably fixing both sides of the body part 110 of the terminal 100.

The fixing member comprises: a pair of clampers 40a and 40b attached to the front surface of the back plate 10 at one sides thereof, the clampers 40a and 40b being provided at the other sides thereof with supporting parts 41a and 41b for pressing the sides of the body part 110 of the terminal 100, respectively; and a resilient member for applying a resilient force to the clampers 40a and 40b such that the body part 110 of the terminal 100 is securely clamped by the clampers 40a and 40b when the body part 110 of the terminal 100 is attached to the back plate 10 of the case 1.

When the terminal 100 is attached to the case 1, the sides of the body part 110 of the terminal 100 are pressed by the supporting parts 41a and 41b of the fixing member. Consequently, the front surface of the sliding cover part 120 disposed on the body part 110 of the terminal 100 is fully exposed, and therefore, the sliding cover part 120 is easily opened and closed.

The resilient member is a bar-type spring, which is bent in the shape of a "[". The resilient member comprises: a horizontal supporting bar 420 for supporting the lower end of the body part 110 of the terminal 100; and vertical supporting bars 421a and 421b integrally connected to both ends of the horizontal supporting bar 420, the vertical supporting bars 421a and 421b being inserted in the supporting part 41a and 41b of the clampers 40a and 40b, respectively.

The vertical supporting bars 421a and 421b are bent such that the ends of the vertical supporting bars 421a and 421b are inclined inward. Consequently, the supporting parts 41a and 41b strongly press the sides of the body part 110 of the terminal 100 when the terminal 100 is attached to the case 1, and therefore, the terminal 100 is securely attached to the case 1.

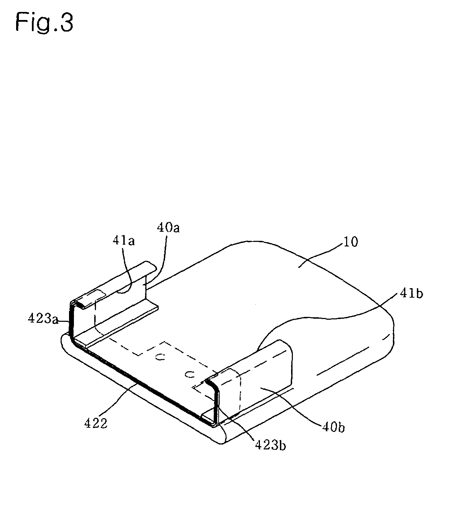

FIG. 3 is a perspective view, partially cutaway, illustrating a case for mobile communication terminals according to a second preferred embodiment of the present invention. Another embodiment of the resilient member is proposed according to the second preferred embodiment of the present invention. As shown in FIG. 3, the resilient member for applying a resilient force to the clampers 40a and 40b is a plate spring made of steel. The resilient member comprises: a base 422 mounted in the back plate 10; and vertical supporting bars 423a and 423b integrally connected to both ends of the base 422 for resiliently supporting the clampers 40a and 40b, respectively.

The base 422 is fixedly attached to the back plate 10, the vertical supporting bars 423a and 423b are inserted in the clampers 40a and 40b, and the ends of the vertical supporting bars 423a and 423b are bent toward the supporting parts 41a and 41b, respectively.

When the body part 110 of the terminal 100 is inserted into the space between the clampers 40a and 40b, the supporting parts 41a and 41b press both sides of the body part 110 of the terminal 100 by the resilient force of the vertical supporting bars 423a and 423b. As a result, the terminal 100 is securely attached to the case 1.

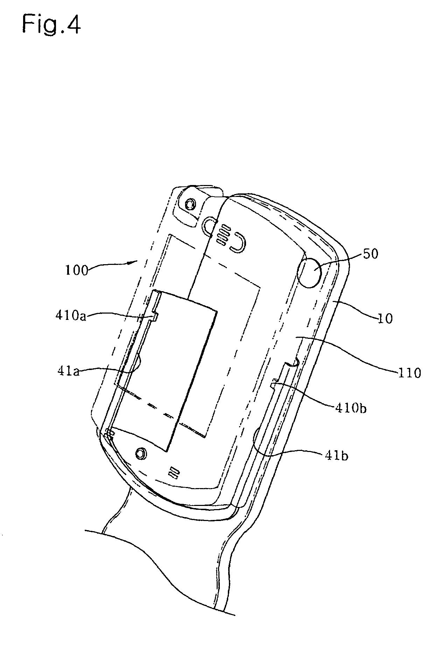

FIG. 4 is a perspective view illustrating a case for mobile communication terminals according to a third preferred embodiment of the present invention. As shown in FIG. 4, the case according to the third preferred embodiment of the present invention includes all of the constructions of the above-described first and second preferred embodiment of the present invention. In addition, the case according to the third preferred embodiment of the present invention further comprises an auxiliary fixing part for secondarily fixing the body part 110 of the terminal 100 to the back plate 10 of the case.

The auxiliary fixing part comprises: a magnet hologram (not shown) disposed at the rear surface of the body part 110 of the terminal 100; and a magnet 50 disposed at the back plate 10 while the magnet 50 corresponds to the magnet hologram.

When the terminal 100 is attached to the case, the supporting parts 41a and 41b press both sides of the body part 110 of the terminal 100 for accomplishing a primary fixing operation, and the magnet hologram attached to the body part 110 of the terminal 100 is attached to the magnet 50 of the back plate 10 for accomplishing a secondary fixing operation. As a result, the terminal 100 is prevented from being separated from the case.

Meanwhile, the terminal 100 is provided at both sides of the body part 110 thereof with fitting grooves, by which the terminal 100 is fitted into a terminal charger. As shown in FIG. 4, fixing protrusions 410a and 410b, which correspond to the fitting grooves of the terminal 100, are formed at the supporting parts 41a and 41b, respectively, such that the terminal 100 is more securely attached to the case.

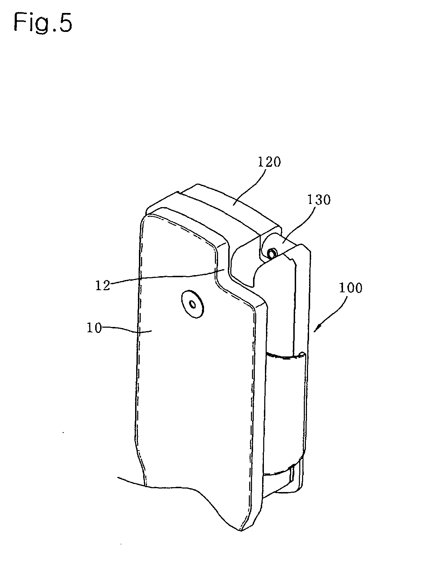

FIG. 5 is a perspective view illustrating a case for mobile communication terminals according to a fourth preferred embodiment of the present invention. As shown in FIG. 5, the case according to the fourth preferred embodiment of the present invention includes all of the constructions of the above-described first and second preferred embodiment of the present invention. Especially, a cutout part 12, which corresponds to a camera 130 mounted to the terminal 110, is formed at a predetermined position of the upper end of the back plate 10.

The camera 130 is rotatably mounted to the upper end of the sliding cover part 120 of the terminal 100. When the camera 130 is rotated while the sliding cover part is not slid upward, a visual field of a lens of the camera is not obstructed by the provision of the cutout part 12. Consequently, photographs of the scenery at the rear of the terminal are taken without limits.

As apparent from the above description, the present invention has the following effects.

When the sliding-type terminal is attached to the case, both sides of the body part of the terminal are resiliently supported by the case such that the front surface of the sliding cover part is fully exposed. Consequently, the present invention has the effect of easily opening and closing the sliding cover part of the terminal while the terminal is attached to the case.

Also, the auxiliary fixing member for secondarily fixing the terminal to the case is provided such that the terminal is doubly fixed to the case. Consequently, the present invention has the effect of preventing the terminal from being separated from the case when the terminal is in use.

Also, the visual field of the lens of the rotary camera is prevented from being obstructed by the case when the rotary camera is provided at the upper end of the terminal. Consequently, the present invention has the effect of taking photographs of the scenery at the rear of the terminal without limits.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

Disclosed herein is a case for mobile communication terminals that is capable of fixing both sides of the body part of a sliding-type terminal when the terminal is attached to the case such that the front surface of a sliding cover part disposed on the body part of the sliding-type terminal is fully exposed. The case comprises a back plate for allowing a terminal to be attached thereto, and a flip-type cover connected to the lower end of the back plate for covering the front surface of the terminal. The back plate is provided at the front surface thereof with a fixing member for detachably fixing both sides of the body part of the terminal. With the case according to the present invention, the sliding cover part is easily opened and closed when the sliding-type terminal is attached to the case.

## Claims

1. A case for mobile communication terminals, the case comprising: a back plate for allowing a terminal to be attached thereto; and a flip-type cover connected to the lower end of the back plate for covering the front surface of the terminal, wherein
the back plate is provided at the front surface thereof with a fixing member for detachably fixing both sides of the body part of the terminal.

2. The case as set forth in claim 1, wherein the fixing member comprises:
a pair of clampers attached to the front surface of the back plate at one sides thereof, the clampers being provided at the other sides thereof with supporting parts for pressing the sides of the body part of the terminal, respectively; and
a resilient member for applying a resilient force to the clampers.

3. The case as set forth in claim 2, wherein the resilient member comprises:
a horizontal supporting bar for supporting the lower end of the body part of the terminal; and
vertical supporting bars integrally connected to both ends of the horizontal supporting bar, the vertical supporting bars being inserted in the supporting part of the clampers, respectively.

4. The case as set forth in claim 2, wherein the resilient member comprises:
a base mounted in the back plate; and
vertical supporting bars integrally connected to both ends of the base for resiliently supporting the clampers, respectively.

5. The case as set forth in any one of claims 1 to 4, further comprising:
an auxiliary fixing part for secondarily fixing the body part of the terminal to the back plate.

6. The case as set forth in claim 5, wherein the auxiliary fixing part comprises:
a magnet hologram disposed at the body part of the terminal; and
a magnet disposed at the back plate, the magnet corresponding to the magnet hologram.

7. The case as set forth in any one of claims 1 to 4, wherein the back plate is provided at a predetermined position of one end thereof with a cutout part, the cutout part corresponding to a camera mounted to the terminal.

8. The case as set forth in any one of claims 2 to 4, wherein the supporting parts are provided with fixing protrusions, respectively, the fixing protrusions being engaged into fitting grooves formed at both sides of the body part of the terminal, respectively.
